# EUROPEAN PATENT APPLICATION

(11) **EP 4 790 111 A1**
(43) Date of publication of application: **12.08.2026**
(21) Application number: 24874473.2
(22) Date of filing: 19.09.2024
(51) Int. Cl.: C09D 133/06, C08F 220/18, C08L 33/06, C09D 5/02, C09D 133/02, C09D 133/14

(54) **AQUEOUS DISPERSION, AQUEOUS COATING MATERIAL, AND PLASTIC MOLDED PRODUCT HAVING COATING FILM OF SAID AQUEOUS COATING MATERIAL**

(30) Priority: 03.10.2023 JP 2023171948
(71) Applicant: DIC Corporation, Tokyo 174-8520 (JP)
(72) Inventor: DOHI Kenta, Takaishi-shi, Osaka 592-0001 (JP); KUROSHIMA Akitaka, Takaishi-shi, Osaka 592-0001 (JP); KAWAHARA Hideaki, Takaishi-shi, Osaka 592-0001 (JP)
(74) Representative: TBK
(86) International application number: PCT/JP2024/033383
(87) International publication number: WO 2025/074864

(57) **Abstract**

Provided is an aqueous dispersion including an acrylic polymer (A) including, as essential raw materials, an alkyl (meth)acrylate (a1) having an alkyl group having 1 or 2 carbon atoms, an isobornyl (meth)acrylate (a2), an unsaturated monomer (a3) having a hydroxyl group, and an unsaturated monomer (a4) having an acid group, and an aqueous medium (B). The alkyl (meth)acrylate (a1) is present in an amount of 20 to 50% by mass, the isobornyl (meth)acrylate (a2) is present in an amount of 20 to 60% by mass, the unsaturated monomer (a3) is present in an amount of 2 to 15% by mass, and the unsaturated monomer (a4) is present in an amount of 2 to 5% by mass in monomer raw materials of the acrylic polymer (A). This aqueous dispersion has excellent storage stability and produces a coating film with excellent appearance, substrate adhesion, hot-water resistance, ethanol resistance, and sunscreen resistance, and is therefore suitably used for an aqueous paint and a plastic molded article having a coating film of the paint.

## Description

### Technical Field

The present invention relates to an aqueous dispersion, an aqueous paint, and a plastic molded article having a coating film of the aqueous paint.

### Background Art

Paint for plastics is a paint applied to plastic surfaces for the purpose of imparting decorative and functional properties to improve the product value of plastic molded articles such as mobile phones, home appliances, and office automation equipment. Specifically, by applying the paint for plastics, it is possible to impart a multicolor finish, appearance, and texture that the plastic molded article surfaces do not have. In addition, from a functional standpoint, it is possible to impart abrasion resistance, resistance to fading and discoloration, sebum resistance, high gloss, high weather resistance, electrical insulation, and other resistance properties.

Most of paints for plastics currently in use are solvent-based paints, in which the medium is composed of organic solvents, and the use of such paints for plastics is not necessarily environmentally compatible because a large amount of organic solvents is dispersed when the paints are applied and dried. As an environmentally compatible measure, water-based paints are being developed by using aqueous resins.

However, among aqueous resins, water-based paints for plastics using aqueous emulsions obtained by emulsion polymerization have inferior wettability and permeability on the surface of plastic molded articles, compared with solvent-based paints, and have problems with hot water-resistant adhesion and hot water whitening resistance because the adhesion to plastic materials and the resin form are emulsion. In addition, when the emulsion paints for plastics are applied to plastic surfaces, the coated surfaces have inferior gloss and image clearness compared with solvent-based paints.

Against this background, a self-emulsifying aqueous resin composition free of an emulsifier has been developed (see, for example, PTL 1). This aqueous resin composition is obtained by dispersing a polymer in an aqueous medium, in which the polymer has a glass transition temperature of 60°C or higher and is obtained by solution polymerization of a mixture of unsaturated monomers including cycloalkyl(meth)acrylate, an unsaturated monomer having a carboxyl group, and an unsaturated monomer having a hydroxyl group as essential components. However, there is a problem of insufficient storage stability.

### Citation List

### Patent Literature

PTL 1: WO 2012/169395

### Summary of Invention

### Technical Problem

An object of the present invention is to provide an aqueous dispersion that has excellent storage stability and produces a coating film with excellent appearance, substrate adhesion, hot-water resistance, ethanol resistance, and sunscreen resistance, as well as an aqueous paint and a plastic molded article having a coating film of the paint. Solution to Problem

The inventors of the present invention have conducted elaborate studies to achieve the object described above and have found that an aqueous dispersion containing an acrylic polymer having a specific weight average molecular weight and including a specific monomer as an essential raw material and an aqueous medium has excellent storage stability and produces a coating film with excellent appearance, substrate adhesion, hot-water resistance, ethanol resistance, and sunscreen resistance. This finding has led to completion of the present invention.

Specifically, the present invention relates to an aqueous dispersion containing an acrylic polymer (A) including, as essential raw materials, an alkyl (meth)acrylate (a1) having an alkyl group having 1 or 2 carbon atoms, an isobornyl (meth)acrylate (a2), an unsaturated monomer (a3) having a hydroxyl group, and an unsaturated monomer (a4) having an acid group, and an aqueous medium (B), wherein the alkyl (meth)acrylate (a1) is present in an amount of 20 to 50% by mass, the isobornyl (meth)acrylate (a2) is present in an amount of 20 to 60% by mass, the unsaturated monomer (a3) is present in an amount of 2 to 15% by mass, and the unsaturated monomer (a4) is present in an amount of 2 to 5% by mass in monomer raw materials of the acrylic polymer (A), the acrylic polymer (A) has a weight average molecular weight of 1,000 to 40,000, and the acrylic polymer (A) has a glass transition temperature of 60 to 90°C.

### Advantageous Effects of Invention

The aqueous dispersion of the present invention has excellent storage stability and produces a coating film with excellent appearance, substrate adhesion, hot-water resistance, ethanol resistance, and sunscreen resistance. The aqueous dispersion of the present invention therefore can be suitably used as a paint for coating various articles such as interiors and exteriors of various vehicles such as automobiles and railroad vehicles; housings of electronic devices such as mobile phones, smartphones, tablet terminals, personal computers, digital cameras, and game consoles; housings of home appliances such as TVs, refrigerators, washing machines, and air conditioners; furniture, toys, and interior decorations; and 3D molded products.

### Description of Embodiments

An aqueous dispersion of the present invention contains an acrylic polymer (A) including, as essential raw materials, an alkyl (meth)acrylate (a1) having an alkyl group having 1 or 2 carbon atoms, an isobornyl (meth)acrylate (a2), an unsaturated monomer (a3) having a hydroxyl group, and an unsaturated monomer (a4) having an acid group, and an aqueous medium (B), wherein the alkyl (meth)acrylate (a1) is present in an amount of 20 to 50% by mass, the isobornyl (meth)acrylate (a2) is present in an amount of 20 to 60% by mass, the unsaturated monomer (a3) is present in an amount of 2 to 15% by mass, and the unsaturated monomer (a4) is present in an amount of 2 to 5% by mass in monomer raw materials of the acrylic polymer (A), the acrylic polymer (A) has a weight average molecular weight of 1,000 to 40,000, and the acrylic polymer (A) has a glass transition temperature of 60 to 90°C.

First, the acrylic polymer (A) will be described. The acrylic polymer (A) is obtained by copolymerizing an alkyl (meth)acrylate (a1) having an alkyl group having 1 or 2 carbon atoms, an isobornyl (meth)acrylate (a2), an unsaturated monomer (a3) having a hydroxyl group, an unsaturated monomer (a4) having a carboxyl group, and if necessary, other unsaturated monomers (a5).

In the present invention, the expression "(meth)acrylate" denotes one or both of methacrylate and acrylate.

Examples of the alkyl (meth)acrylate (a1) having an alkyl group having 1 or 2 carbon atoms include methyl methacrylate, methyl acrylate, ethyl methacrylate, and ethyl acrylate. Among these, methyl methacrylate is preferable in view of enhanced sunscreen resistance of the resulting coating film. These alkyl (meth)acrylates (a1) can be used alone or in combination of two or more.

Examples of the monomer (a3) having a hydroxyl group include 2-hydroxyethyl (meth)acrylate, 3-hydroxypropyl (meth)acrylate, 4-hydroxy-n-butyl (meth)acrylate, 2-hydroxypropyl (meth)acrylate, 2-hydroxy-n-butyl (meth)acrylate, 3-hydroxy-n-butyl (meth)acrylate, 1,4-cyclohexanedimethanol mono(meth)acrylate, glycerol mono(meth)acrylate, polyoxyethylene mono(meth)acrylate, polyoxypropylene mono(meth)acrylate, polyoxybutylene mono(meth)acrylate, 2-hydroxy-3-phenoxypropyl (meth)acrylate, 2-(meth)acryloyloxyethyl-2-hydroxyethylphthalate, and polycaprolactone-modified hydroxyethyl mono(meth)acrylate. Among these, 2-hydroxyethyl (meth)acrylate is preferable in view of enhanced sunscreen resistance of the resulting coating film. These unsaturated monomers (a3) can be used alone or in combination of two or more.

Examples of the unsaturated monomer (a4) having a carboxyl group include unsaturated monocarboxylic acids such as (meth)acrylic acid, crotonic acid, β-carboxyethyl (meth)acrylate, ω-carboxy-polycaprolactone mono(meth)acrylate, 2-(meth)acryloyloxyethyl succinate, and 2-(meth)acryloyloxyethyl hexahydrophthalate; and unsaturated dicarboxylic acids such as maleic acid, fumaric acid, and itaconic acid, or half-esters of these unsaturated dicarboxylic acids. Among these, (meth)acrylic acid is preferable in view of excellent sunscreen resistance of the resulting coating film. These unsaturated monomers (a4) can be used alone or in combination of two or more.

The other unsaturated monomers (a5) are unsaturated monomers other than the alkyl (meth)acrylate (a1), the isobornyl (meth)acrylate (a2), the unsaturated monomer (a3), and the unsaturated monomer (a4), and examples thereof include n-propyl (meth)acrylate, isopropyl (meth)acrylate, n-butyl (meth)acrylate, isobutyl (meth)acrylate, t-butyl (meth)acrylate, n-pentyl (meth)acrylate, n-hexyl (meth)acrylate, n-heptyl (meth)acrylate, n-octyl (meth)acrylate, 2-ethylhexyl (meth)acrylate, cyclohexyl (meth)acrylate, nonyl (meth)acrylate, decyl (meth)acrylate, dodecyl (meth)acrylate, tridecyl (meth)acrylate, cetyl (meth)acrylate, stearyl (meth)acrylate, behenyl (meth)acrylate, 4-tert-butylcyclohexyl (meth)acrylate, dicyclopentanyl (meth)acrylate, benzyl (meth)acrylate; acrylamide, N,N-dimethyl (meth)acrylamide, (meth)acrylonitrile, 3-(meth)acryloyloxypropyltrimethoxysilane, N,N-dimethylaminoethyl (meth)acrylate, 2-(meth)acryloyloxyethyl acid phosphate, glycidyl (meth)acrylate, vinyl acetate, styrene, α-methylstyrene, p-methylstyrene, p-methoxystyrene, and diacrylate compounds such as ethylene glycol diacrylate. Among these, alkyl (meth)acrylate having an alkyl group having 3 to 20 carbon atoms and styrene are preferable in view of enhanced sunscreen resistance of the resulting coating film. These unsaturated monomers (a5) can be used alone or in combination of two or more.

The alkyl (meth)acrylate (a1) is present in an amount of 20 to 50% by mass in the unsaturated monomer raw materials of the acrylic polymer (A), preferably 25 to 45% by mass in view of further improving the balance of storage stability, water resistance, and sunscreen resistance.

The isobornyl (meth)acrylate (a2) is present in an amount of 20 to 60% by mass in the unsaturated monomer raw materials of the acrylic polymer (A), preferably 30 to 50% by mass in view of further improving the balance of storage stability, water resistance, solvent resistance, and sunscreen resistance.

The unsaturated monomer (a3) is present in an amount of 2 to 15% by mass in the unsaturated monomer raw materials of the acrylic polymer (A), preferably 8 to 12% by mass in view of further improving adhesion to plastic substrates.

The unsaturated monomer (a4) is present in an amount of 2 to 5% by mass in the unsaturated monomer raw materials of the acrylic polymer (A), preferably 2 to 4% by mass in view of further improving the balance of water resistance and sunscreen resistance.

The unsaturated monomers (a5) are preferably present in an amount of 5 to 20% by mass in the unsaturated monomer raw materials of the acrylic polymer (A) in view of further improving adhesion to plastic substrates.

The hydroxyl value of the acrylic polymer (A) is preferably 8.5 to 65 mg KOH/g, more preferably 35 to 55 mg KOH/g in view of further improving the balance of solvent resistance and sunscreen resistance.

The acid value of the acrylic polymer (A) is preferably 15 to 40 mg KOH/g, more preferably 15 to 25 mg KOH/g in view of further improving the balance of water resistance and sunscreen resistance.

In the present invention, the acid value and the hydroxyl value of the acrylic polymer are the acid value and the hydroxyl value obtained by calculation from the monomer composition which is the raw material.

The weight average molecular weight of the acrylic polymer (A) is 1,000 to 40,000, preferably 15,000 to 35,000 in view of further improving the balance of solvent resistance and sunscreen resistance.

The average molecular weight in the present invention is a value in terms of polystyrene based on gel permeation chromatography (hereinafter abbreviated as "GPC") measurement.

The glass transition temperature of the acrylic polymer (A) is 60 to 90°C, preferably 70 to 90°C in view of further improving water resistance, solvent resistance, and sunscreen resistance.

In the present invention, the glass transition temperature is obtained by calculation according to the Fox equation: 1/Tg = W1/Tg1 + W2/Tg2 + ... (Tg: glass transition temperature to be determined, W1: weight fraction of component 1, Tg1: glass transition temperature of homopolymer of component 1). The value of glass transition temperature of homopolymer of each component is derived from the values listed in "Handbook of Pressure Sensitive Adhesive Technology" published by Nikkan Kogyo Shimbun, Ltd. or "Polymer Handbook" published by Wiley Interscience.

Various methods can be used as a method for producing the acrylic polymer (A). For example, the unsaturated monomer raw materials are polymerized in an organic solvent using a polymerization initiator.

Examples of the organic solvent include aromatic hydrocarbon compounds such as toluene and xylene; alicyclic hydrocarbon compounds such as cyclohexane, methylcyclohexane, and ethylcyclohexane; ketone compounds such as acetone, methyl ethyl ketone, methyl isobutyl ketone, and cyclohexanone; ester compounds such as ethyl acetate, n-butyl acetate, isobutyl acetate, and propylene glycol monomethyl ether acetate; alcohol compounds such as n-butanol, isopropyl alcohol, and cyclohexanol; glycol compounds such as ethylene glycol monobutyl ether, propylene glycol monomethyl ether, and diethylene glycol dimethyl ether; aliphatic hydrocarbon compounds such as heptane, hexane, octane, and mineral turpentine. Among these, it is preferable to use a water-miscible organic solvent because it can be used as it is as the aqueous medium (B). These organic solvents can be used alone or in combination of two or more.

Examples of the polymerization initiator include organic peroxides such as ketone peroxide compounds such as cyclohexanone peroxide, 3,3,5-trimethylcyclohexanone peroxide, and methylcyclohexanone peroxide; peroxyketal compounds such as 1,1-bis(tert-butylperoxy)-3,3,5-trimethylcyclohexane, 1,1-bis(tert-butylperoxy)cyclohexane, n-butyl-4,4-bis(tert-butylperoxy)valerate, 2,2-bis(4,4-ditert-butylperoxycyclohexyl)propane, 2,2-bis(4,4-ditert-amylperoxycyclohexyl)propane, 2,2-bis(4,4-ditert-hexylperoxycyclohexyl)propane, 2,2-bis(4,4-ditert-octylperoxycyclohexyl)propane, and 2,2-bis(4,4-dicumylperoxycyclohexyl)propane; hydroperoxide compounds such as cumene hydroperoxide and 2,5-dimethylhexane-2,5-dihydroperoxide; dialkyl peroxide compounds such as 1,3-bis(tert-butylperoxy-m-isopropyl)benzene, 2,5-dimethyl-2,5-di(tert-butylperoxy)hexane, diisopropylbenzene peroxide, tert-butylcumyl peroxide, and ditert-butyl peroxide; diacyl peroxide compounds such as decanoyl peroxide, lauroyl peroxide, benzoyl peroxide, and 2,4-dichlorobenzoyl peroxide; peroxycarbonate compounds such as bis(tert-butylcyclohexyl) peroxydicarbonate; and peroxyester compounds such as tert-butylperoxy-2-ethylhexanoate, tert-amylperoxy-2-ethylhexanoate, tert-butylperoxy benzoate, and 2,5-dimethyl-2,5-di(benzoylperoxy)hexane, and azo compounds such as 2,2'-azobisisobutyronitrile, 2,2'-azobis(2-methyl)butyronitrile, and 1,1'-azobis(cyclohexane-1-carbonitrile). These polymerization initiators can be used alone or in combination of two or more.

Examples of the aqueous medium (B) include water, hydrophilic organic solvents, and mixtures thereof. Preferable examples of the hydrophilic organic solvents are water-miscible organic solvents that mix with water without separation. Among those, an organic solvent having a solubility in water (the grams of the organic solvent dissolved in 100 g of water) of 3 g or more at 25°C is preferable. Examples of the water-miscible organic solvents include alcohol solvents such as methanol, ethanol, propanol, butanol, 1,3-butylene glycol-3-monomethyl ether (general name: 3-methoxybutanol), and 3-methyl-3-methoxy butanol (product name: SOLFIT, manufactured by Kuraray Co., Ltd.); ketone solvents such as acetone and methyl ethyl ketone; and glycol ether solvents such as ethylene glycol monomethyl ether, ethylene glycol dimethyl ether, ethylene glycol monoethyl ether, ethylene glycol diethyl ether, ethylene glycol monopropyl ether, ethylene glycol monoisopropyl ether, monobutyl ether, diethylene glycol monomethyl ether, diethylene glycol dimethyl ether, diethylene glycol monoethyl ether, diethylene glycol diethyl ether, diethylene glycol monoisopropyl ether, diethylene glycol monobutyl ether, triethylene glycol monomethyl ether, triethylene glycol dimethyl ether, propylene glycol monomethyl ether, propylene glycol dimethyl ether, propylene glycol monopropyl ether, propylene glycol monobutyl ether, dipropylene glycol monomethyl ether, and dipropylene glycol dimethyl ether. These aqueous media (B) can be used alone or in combination of two or more.

The aqueous dispersion of the present invention is preferably an aqueous dispersion in which the acrylic polymer (A) is dispersed in the aqueous medium (B), and the method for dispersing the acrylic polymer (A) in the aqueous medium (B) includes, for example, a phase inversion emulsification method.

The phase inversion emulsification method includes, for example, a method that neutralizes some or all of the acid groups in the acrylic polymer (A) by adding a basic compound to the acrylic polymer (A), and then disperses the acrylic polymer (A) in water by adding water.

Examples of the basic compound include organic amines such as methylamine, dimethylamine, trimethylamine, ethylamine, diethylamine, triethylamine, butylamine, dibutylamine, tributylamine, monoalkanolamines such as N,N-dimethylethanolamine and 2-aminoethanol, diethanolamine, diisopropanolamine, and dibutanolamine; inorganic basic compounds such as ammonia, sodium hydroxide, and potassium hydroxide; quaternary ammonium hydroxides such as tetramethylammonium hydroxide, tetra-n-butylammonium hydroxide, and trimethylbenzylammonium hydroxide. Among these, it is preferable to use organic amines and ammonia (or ammonia water). These basic compounds can be used alone or in combination of two or more.

The basic compound is preferably used in such an amount that the neutralization rate of the acid groups of the acrylic polymer (A) is in the range of 50 to 100%, in view of further improving the dispersibility and storage stability of the aqueous dispersion.

Each of the above raw materials used in the aqueous dispersion of the present invention may be a biomass raw material.

The average particle size of particles formed with the acrylic polymer (A) in the aqueous dispersion of the present invention is preferably 50 to 200 nm in view of further improving the appearance of the coating film and the adhesion to plastic substrates. The average particle size in the present invention here refers to the value measured by a method that determines a particle size distribution using the measurement principle of detecting dynamic scattered light of particles.

The aqueous dispersion of the present invention can be blended with a curing agent at the time of paint formulation. Examples of the curing agent include polyisocyanate compounds, amino resins, epoxy compounds, oxazoline compounds, and carbodiimide compounds. Polyisocyanate compounds are preferable. These curing agents can be used alone or in combination of two or more.

Examples of the polyisocyanate compounds include aromatic diisocyanate compounds such as tolylene diisocyanate, diphenylmethane diisocyanate, m-xylene diisocyanate, m-phenylenebis(dimethylmethylene) diisocyanate; and aliphatic or alicyclic diisocyanate compounds such as hexamethylene diisocyanate, lysine diisocyanate, 1,3-bis(isocyanatomethyl)cyclohexane, 2-methyl-1,3-diisocyanatocyclohexane, 2-methyl-1,5-diisocyanatocyclohexane, 4,4'-dicyclohexylmethane diisocyanate, and isophorone diisocyanate.

Other examples of the polyisocyanate compounds that can be used include prepolymers having an isocyanate group obtained by an addition reaction of the above diisocyanate compounds with polyhydric alcohols; compounds having an isocyanurate ring obtained by cyclotrimerization of the above diisocyanate compounds; polyisocyanate compounds having a urea bond or a burette bond obtained by a reaction of the above diisocyanate compounds with water; homopolymers of acrylic monomers having an isocyanate group, such as 2-isocyanatoethyl (meth)acrylate, 3-isopropenyl-α,α-dimethylbenzyl isocyanate, and (meth)acryloyl isocyanate; copolymers having an isocyanate group obtained by copolymerization of the above acrylic monomers having an isocyanate group with a monomer such as another acrylic monomer, a vinyl ester compound, a vinyl ether compound, an aromatic vinyl monomer, and a fluoroolefin.

The polyisocyanate compounds are preferably water-dispersible polyisocyanates obtained by modifying the polyisocyanate compounds described above, because when they are blended with the aqueous dispersion of the present invention, the mixture has excellent stability and high curing ability with a high degree of freedom in pot life.

The polyisocyanate compounds can be used alone or in combination of two or more.

The polyisocyanate compound is preferably blended in such an amount that the equivalent ratio of the isocyanate groups in the polyisocyanate compound to the hydroxyl groups in the acrylic polymer (A) (NCO/OH) is in the range of 0.5 to 2.0 and more preferably in the range of 0.8 to 1.5, in view of forming a coating film having high strength.

The urethane-forming reaction described above may be carried out in the presence of a urethane-forming catalyst in order to accelerate the progress of the reaction. Examples of the urethane-forming catalyst include amine compounds such as triethylamine, organotin compounds such as dibutyltin dioctate, dibutyltin dilaurate, dioctyltin dilaurate, octyltin trilaurate, dioctyltin dineodecanate, dibutyltin diacetate, dioctyltin diacetate, and tin dioctylate, and organometallic compounds such as zinc octylate (zinc 2-ethylhexanoate).

The aqueous paint of the present invention may contain, as ingredients other than those described above, additives such as a defoaming agent, a viscosity modifier, a light stabilizer, a weathering stabilizer, a heat stabilizer, a UV absorber, an antioxidant, a leveling agent, a pigment dispersant, and a thickener. Pigments such as titanium dioxide, calcium carbonate, aluminum powder, copper powder, mica powder, iron oxide, carbon black, phthalocyanine blue, toluidine red, perylene, quinacridone, and benzidine yellow can also be used.

The aqueous paint of the present invention can be applied, for example, by spraying, an applicator, a bar coater, a gravure coater, a roll coater, a comma coater, a knife coater, an air knife coater, a curtain coater, a kiss coater, a shower coater, a wheeler coater, a spin coater, dipping, or screen printing. After application, the paint is formed into a coating film, for example, by drying in the range of room temperature to 120°C.

There is no particular limitation as to the articles that can be coated with the aqueous paint of the present invention. However, because of excellent adhesion to plastic substrates, plastic molded articles are preferable, such as interiors and exteriors of various vehicles such as automobiles and railroad vehicles; housings of electronic devices such as mobile phones, smartphones, tablet terminals, personal computers, digital cameras, and game consoles; housings of home appliances such as TVs, refrigerators, washing machines, and air conditioners; furniture and interior decorations; and 3D molded products.

### EXAMPLES

The present invention will be described in more detail below with specific examples. The average particle size was measured using Nanotrac UPA-EX150 manufactured by NIKKISO CO, LTD. The average molecular weight was measured under the following conditions of GPC measurement.

### [Conditions of GPC Measurement]

Measuring system: High-speed GPC system ("HLC-8220GPC" manufactured by Tosoh Corporation)
Column: The following columns manufactured by Tosoh Corporation were connected in series.
"TSKgel G5000" (7.8 mm I.D. × 30 cm) × 1
"TSKgel G4000" (7.8 mm I.D. × 30 cm) × 1
"TSKgel G3000" (7.8 mm I.D. × 30 cm) × 1
"TSKgel G2000" (7.8 mm I.D. × 30 cm) × 1
Detector: RI (differential refractometer)
Column temperature: 40°C
Eluent: Tetrahydrofuran (THF)
Flow rate: 1.0 mL/min
Injection volume: 100 µL (tetrahydrofuran solution having a sample concentration of 4 mg/mL)
Standard sample: A calibration curve was prepared using the following monodisperse polystyrene.

### (Monodisperse Polystyrene)

"TSKgel Standard polystyrene A-500" manufactured by Tosoh Corporation
"TSKgel Standard polystyrene A-1000" manufactured by Tosoh Corporation
"TSKgel Standard polystyrene A-2500" manufactured by Tosoh Corporation
"TSKgel Standard polystyrene A-5000" manufactured by Tosoh Corporation
"TSKgel Standard polystyrene F-1" manufactured by Tosoh Corporation
"TSKgel Standard polystyrene F-2" manufactured by Tosoh Corporation
"TSKgel Standard polystyrene F-4" manufactured by Tosoh Corporation
"TSKgel Standard polystyrene F-10" manufactured by Tosoh Corporation
"TSKgel Standard polystyrene F-20" manufactured by Tosoh Corporation
"TSKgel Standard polystyrene F-40" manufactured by Tosoh Corporation
"TSKgel Standard polystyrene F-80" manufactured by Tosoh Corporation
"TSKgel Standard polystyrene F-128" manufactured by Tosoh Corporation
"TSKgel Standard polystyrene F-288" manufactured by Tosoh Corporation
"TSKgel Standard polystyrene F-550" manufactured by Tosoh Corporation

### (Example 1: Production of Aqueous Dispersion (1))

In a reaction vessel equipped with a reflux cooler, a stirrer, a thermometer, a dropping funnel, and a nitrogen inlet tube, 295.0 parts by mass of diethylene glycol dimethyl ether was added and stirred, and the temperature was raised to 135°C. To this, under a nitrogen gas flow, an unsaturated monomer mixture (I) including 19.6 parts by mass of methyl methacrylate, 28.0 parts by mass of isobornyl methacrylate, 8.4 parts by mass of 2-hydroxyethyl methacrylate, 8.8 parts by mass of n-butyl acrylate, and 3.5 parts by mass of styrene, 4.2 parts by mass of a polymerization initiator (1) (tert-butylperoxy-2-ethylhexanoate), and 60.0 parts by mass of diethylene glycol dimethyl ether were continuously added dropwise over 2.5 hours. Then, an unsaturated monomer mixture (II) including 8.4 parts by mass of methyl methacrylate, 12.0 parts by mass of isobornyl methacrylate, 3.6 parts by mass of 2-hydroxyethyl methacrylate, 2.5 parts by mass of acrylic acid, 3.8 parts by mass of n-butyl acrylate, and 1.5 parts by mass of styrene, 1.8 parts by mass of a polymerization initiator (2) (tert-butylperoxy-2-ethylhexanoate), and 45.0 parts by mass of diethylene glycol dimethyl ether were continuously added dropwise over 1.5 hours. After stirring at the same temperature for 1.5 hours, the mixture was cooled to 95°C, and after adding 25.0 parts by mass of dimethylethanolamine, 1071.4 parts by mass of ion-exchanged water was further added to disperse the mixture in the water to obtain an aqueous dispersion (1) with a nonvolatile content of 44.0% by mass. The acrylic polymer in this aqueous dispersion (1) had an acid value of 19.5 mg KOH/g and a solid hydroxyl value of 51.7 mg KOH/g.

### (Example 2: Production of Aqueous Dispersion (2))

An aqueous dispersion (2) with a nonvolatile content of 44.0% by mass was obtained in the same manner as in Example 1, except that the unsaturated monomer mixtures (I) and (II) were changed as listed in Table 1, and the amount of the polymerization initiator (1) was changed to 8.4 parts by mass and the amount of the polymerization initiator (2) was changed to 3.6 parts by mass. The acrylic polymer in this aqueous dispersion (2) had an acid value of 19.5 mg KOH/g and a hydroxyl value of 43.1 mg KOH/g.

### (Example 3: Production of Aqueous Dispersion (3))

An aqueous dispersion (3) with a nonvolatile content of 44.0% by mass was obtained in the same manner as in Example 1, except that the unsaturated monomer mixtures (I) and (II) were changed as listed in Table 1. The acrylic polymer in this aqueous dispersion (3) had an acid value of 19.5 mg KOH/g and a hydroxyl value of 43.1 mg KOH/g.

### (Example 4: Production of Aqueous Dispersion (4))

An aqueous dispersion (4) with a nonvolatile content of 44.0% by mass was obtained in the same manner as in Example 1, except that the unsaturated monomer mixtures (I) and (II) were changed as listed in Table 1. The acrylic polymer in this aqueous dispersion (4) had an acid value of 27.2 mg KOH/g and a hydroxyl value of 43.1 mg KOH/g.

### (Example 5: Production of Aqueous Dispersion (5))

An aqueous dispersion (5) with a nonvolatile content of 44.0% by mass was obtained in the same manner as in Example 1, except that the unsaturated monomer mixtures (I) and (II) were changed as listed in Table 1. The acrylic polymer in this aqueous dispersion (5) had an acid value of 19.5 mg KOH/g and a hydroxyl value of 43.1 mg KOH/g.

### (Comparative Example 1: Production of Aqueous Dispersion (R1))

An aqueous dispersion (R1) with a nonvolatile content of 44.0% by mass was obtained in the same manner as in Example 1, except that the unsaturated monomer mixtures (I) and (II) were changed as listed in Table 1. The acrylic polymer in this aqueous dispersion (R1) had a solid acid value of 19.5 mg KOH/g and a solid hydroxyl value of 64.7 mg KOH/g.

### (Comparative Example 2: Production of Aqueous Dispersion (R2))

An aqueous dispersion (5) with a nonvolatile content of 44.0% by mass was obtained in the same manner as in Example 1, except that the unsaturated monomer mixtures (I) and (II) were changed as listed in Table 1. The acrylic polymer in this aqueous dispersion (R2) had a solid acid value of 19.5 mg KOH/g and a solid hydroxyl value of 64.7 mg KOH/g.

### (Comparative Example 3: Production of Aqueous Dispersion (R3))

An aqueous dispersion (R3) with a nonvolatile content of 44.0% by mass was obtained in the same manner as in Example 1, except that the unsaturated monomer mixtures (I) and (II) were changed as listed in Table 1. The acrylic polymer in this aqueous dispersion (R3) had a solid acid value of 19.5 mg KOH/g and a solid hydroxyl value of 43.1 mg KOH/g.

### (Comparative Example 4: Production of Aqueous Dispersion (R4))

An aqueous dispersion (R4) with a nonvolatile content of 44.0% by mass was obtained in the same manner as in Example 1, except that the unsaturated monomer mixtures (I) and (II) were changed as listed in Table 1. The acrylic polymer in this aqueous dispersion (R4) had a solid acid value of 19.5 mg KOH/g and a solid hydroxyl value of 43.1 mg KOH/g.

### [Evaluation of Storage Stability]

The aqueous dispersion obtained above was allowed to stand at 40°C for one month, and the condition of the aqueous dispersion was evaluated according to the following criteria.
A: Neither separation nor precipitation observed
B: Separation and/or precipitation observed

The monomer compositions, property values, and evaluation results of acrylic polymers in the aqueous dispersions (1) to (5) and (R1) to (R4) obtained above are listed in Tables 1 and 2.

**[Table 1]**

| Table 1 | | | | Ex. 1 | Ex. 2 | Ex. 3 | Ex. 4 | Ex. 5 |
|---|---|---|---|---|---|---|---|---|
| Aqueous dispersion | | | | (1) | (2) | (3) | (4) | (5) |
| | Unsaturated monomer mixture (I) | Alkyl (meth)acrylate (a1) having alkyl group having 1 or 2 carbon atoms | MMA | 19.6 | 21.0 | 21.0 | 20.3 | 28.7 |
| Monomer composition of acrylic polymer (A) (parts by mass) | | Isobornyl (meth)acrylate (a2) | IBOMA | 28.0 | 28.0 | 28.0 | 28.0 | 21.0 |
| | | Unsaturated monomer (a3) having hydroxyl group | β-HEMA | 8.4 | 7.0 | 7.0 | 7.0 | 7.0 |
| | | Other unsaturated monomers (a5) | nBA | 8.75 | 8.75 | 8.75 | 8.75 | 8.05 |
| | | | St | 3.5 | 3.5 | 3.5 | 3.5 | 3.5 |
| | Unsaturated monomer mixture (II) | Alkyl (meth)acrylate (a1) having alkyl group | MMA | 8.4 | 9.0 | 9.0 | 8.7 | 12.3 |
| | | having 1 or 2 carbon atoms | | | | | | |
| | | Isobornyl (meth)acrylate (a2) | IBOMA | 12.0 | 12.0 | 12.0 | 12.0 | 9.0 |
| | | Unsaturated monomer (a3) having hydroxyl group | β-HEMA | 3.6 | 3.0 | 3.0 | 3.0 | 3.0 |
| | | Unsaturated monomer (a4) having acid group | AA | 2.5 | 2.5 | 2.5 | 3.5 | 2.5 |
| | | Other unsaturated monomers (a5) | nBA | 3.75 | 3.75 | 3.75 | 3.75 | 3.45 |
| | | | St | 1.5 | 1.5 | 1.5 | 1.5 | 1.5 |
| Weight average molecular weight of acrylic polymer (A) | | | | 28000 | 18000 | 27000 | 27000 | 27000 |
| Glass transition temperature (°C) of acrylic polymer (A) | | | | 82 | 83 | 83 | 80 | 82 |
| Average particle size (nm) of aqueous dispersion | | | | 186 | 187 | 157 | 125 | 163 |
| Storage stability | | | | A | A | A | A | A |

**[Table 2]**

| Table 2 | | | | Comp. Ex. 1 | Comp. Ex. 2 | Comp. Ex. 3 | Comp. Ex. 4 |
|---|---|---|---|---|---|---|---|
| Aqueous dispersion | | | | (R1) | (R2) | (R3) | (R4) |
| | Unsaturated monomer mixture (I) | Alkyl (meth)acrylate (a1) having alkyl group having 1 or 2 carbon atoms | MMA | 25.55 | 9.8 | 45.15 | |
| | | Isobornyl (meth)acrylate (a2) | IBOMA | 28.0 | 28.0 | 7.0 | 45.5 |
| Monomer composition of acrylic polymer (parts by mass) | | Unsaturated monomer (a3) having hydroxyl group | β-HEMA | 10.5 | 10.5 | 7.0 | 7.0 |
| | | Other unsaturated monomers (a5) | nBA | 0.7 | 0.7 | 5.6 | 12.25 |
| | | | 2-EHMA | | 15.75 | | |
| | | | St | 3.5 | 3.5 | 3.5 | 3.5 |
| | Unsaturated monomer mixture (II) | Alkyl (meth)acrylate (a1) having alkyl group having 1 or 2 carbon atoms | MMA | 10.95 | 4.2 | 19.35 | |
| | | Isobornyl (meth)acrylate (a2) | IBOMA | 12.0 | 12.0 | 3.0 | 19.5 |
| | | Unsaturated monomer (a3) having hydroxyl group | β-HEMA | 4.5 | 4.5 | 3.0 | 3.0 |
| | | Unsaturated monomer (a4) having acid group | AA | 2.5 | 2.5 | 2.5 | 2.5 |
| | | Other unsaturated monomers (a5) | nBA | 0.3 | 0.3 | 2.4 | 5.25 |
| | | | 2-EHMA | | 6.75 | | |
| | | | St | 1.5 | 1.5 | 1.5 | 1.5 |
| Weight average molecular weight of acrylic polymer | | | | 34000 | 37000 | 27000 | 41000 |
| Glass transition temperature (°C) of acrylic polymer | | | | 111 | 75 | 82 | 80 |
| Average particle size (nm) of aqueous dispersion | | | | 198 | 193 | 359 | 450 |
| Storage stability | | | | A | A | B | B |

The abbreviations in the tables are as follows.
MMA: Methyl methacrylate
IBOMA: Isobornyl methacrylate
β-HEMA: 2-Hydroxyethyl methacrylate
nBA: n-Butyl acrylate
2-EHMA: 2-Ethylhexyl methacrylate
St: Styrene

### (Example 6: Preparation and Evaluation of Aqueous Paint (1))

An aqueous paint (1) was prepared by mixing under stirring 80 parts by mass of the aqueous dispersion (1) obtained above and 11.6 parts by mass of a curing agent ("BURNOCK DNW-5500" manufactured by DIC Corporation, water-dispersible polyisocyanate with a nonvolatile content of 80% by mass), and then diluting the mixture with ion-exchanged water so that the viscosity determined by a "Viscosity Cup NK-2" manufactured by ANEST IWATA Corporation indicated 15 seconds (23°C). The coating film was evaluated as follows using the resulting aqueous paint (1).

### (Examples 7 to 11: Preparation and Evaluation of Aqueous Paints (2) to (6))

Aqueous paints (2) to (6) were prepared in the same manner as in Example 1, except that the formulations were changed as listed in Table 3, and then the coating films of the paints were evaluated.

### (Comparative Examples 5 to 8: Preparation and Evaluation of Aqueous Paints (R1) to (R4))

Aqueous paints (R1) to (R4) were prepared in the same manner as in Example 1, except that the formulations were changed as listed in Table 3, and then the coating films of the paints were evaluated.

### [Preparation of Coating Film for Evaluation]

The aqueous paint obtained above was applied to an ABS (acrylonitrile-butadiene-styrene copolymer) plate and a PC (polycarbonate) plate using a spray gun to obtain a dry film thickness of 25 µm. The applied paint was then subjected to heat drying at 80°C for 30 minutes in a dryer and then cured at 23°C for 7 days to prepare a coating film for evaluation.

### [Evaluation of Coating Film Appearance]

The surface of the coating film for evaluation (ABS plate) obtained above was visually observed, and the appearance of the coating film was evaluated according to the following criteria.
A: Transparent, no whitening, no cracks, no foreign matter
B: Whitening, cracks, or foreign matter observed

### [Evaluation of Substrate Adhesion]

A cross cut test (1 mm, 100 squares, four directions) was conducted for the coating film for evaluation obtained above in accordance with JIS K 5600-5-6. The coating film was visually observed, and the substrate adhesion was evaluated according to the following criteria. Note that 5B is the best rating.
5B: No defects
4B: Defects within 5%
3B: Defects greater than 5% and within 15%
2B: Defects greater than 15% and within 35%
1B: Defects greater than 35% and within 65%
0B: Defects greater than 65%

### [Evaluation of Hot-Water Resistance (Whitening)]

The coating film for evaluation (ABS plate) obtained above was immersed in tap water heated to 50°C for 48 hours. The surface of the coating film was visually observed, and the hot-water resistance (whitening) was evaluated according to the following criteria.
A: No whitening
B: Whitening observed

### [Evaluation of Hot-Water Resistance (Adhesion)]

The coating film for evaluation obtained above was immersed in tap water heated to 50°C for 36 hours, and then subjected to a cross cut test (1 mm, 100 squares, four directions) in accordance with JIS K 5600-5-6. The coating film was visually observed, and hot-water resistance (adhesion) was evaluated according to the following criteria. Note that 5B is the best rating.
5B: No defects
4B: Defects within 5%
3B: Defects greater than 5% and within 15%
2B: Defects greater than 15% and within 35%
1B: Defects greater than 35% and within 65%
0B: Defects greater than 65%

### [Evaluation of Sunscreen Resistance]

The coating film for evaluation (ABS plate) obtained above was cut into a size of 50 mm × 70 mm, and sunscreen cream ("Coppertone Sport Ultra Sweatproof SPF30" manufactured by SSL Healthcare Japan Ltd.) was applied evenly (0.5 g/100 cm²) on the coating film. The sunscreen cream was then dried at 55°C for four hours. After drying, the sunscreen cream was washed with a neutral detergent ("Cucute" manufactured by Kao Corporation), and the coating film was visually observed, and sunscreen resistance was evaluated according to the following criteria.
A: No trace left
B: Trace left on part of the coating film
C: Trace left on the entire coating film

### [Evaluation of Ethanol Resistance]

A rubbing test was conducted by pressing a felt (manufactured by VALQUA, LTD., 10 mm wide × 10 mm high × 40 mm deep) moistened with ethanol (first grade reagent, 95% or higher) against the coating film for evaluation (ABS plate) obtained above, and reciprocating the felt up to 500 times while applying a 1 kg load. The condition of the coating film after rubbing was visually observed, and ethanol resistance was evaluated according to the following criteria based on the number of times until the ABS base, which is the substrate, became visible.
A: More than 500 times
B: More than 250 times and 500 times or less
C: 250 times or less

The formulated compositions and evaluation results of the aqueous paints (1) to (6) and (R1) to (R4) obtained above are listed in Tables 3 and 4.

**[Table 3]**

| Table 3 | | Ex. 6 | Ex. 7 | Ex. 8 | Ex. 9 | Ex. 10 | Ex. 11 |
|---|---|---|---|---|---|---|---|
| Aqueous paint | | (1) | (2) | (3) | (4) | (5) | (6) |
| | Aqueous dispersion (1) | 80 | | | | | |
| | Aqueous dispersion (2) | | 80 | | | | |
| | Aqueous dispersion (3) | | | 80 | 80 | | |
| Formulation (parts by mass) | Aqueous dispersion (4) | | | | | 80 | |
| | Aqueous dispersion (5) | | | | | | 80 |
| | Curing agent | 11.6 | 12.0 | 9.6 | 14.5 | 9.6 | 9.6 |
| | Solvent | 3.9 | 4.0 | 3.2 | 4.8 | 3.2 | 3.2 |
| | Equivalent ratio (NCO/OH) | 1.2 | 1.5 | 1.2 | 1.8 | 1.2 | 1.2 |
| | Coating film appearance | A | A | A | A | A | A |
| | Substrate adhesion (ABS) | 5B | 5B | 5B | 5B | 5B | 5B |
| | Substrate adhesion (PC) | 5B | 5B | 5B | 5B | 5B | 5B |
| | Hot-water resistance (whitening) | A | A | A | A | A | A |
| Evaluation results | Hot-water resistance (adhesion: ABS) | 5B | 5B | 5B | 5B | 5B | 5B |
| | Hot-water resistance (adhesion: PC) | 5B | 5B | 5B | 5B | 5B | 5B |
| | Ethanol resistance | A | A | A | A | A | A |
| | Sunscreen resistance | A | A | A | A | A | A |

**[Table 4]**

| Table 4 | | Comp. Ex. 5 | Comp. Ex. 6 | Comp. Ex. 7 | Comp. Ex. 8 |
|---|---|---|---|---|---|
| Aqueous paint | | (R1) | (R2) | (R3) | (R4) |
| Formulation (parts by mass) | Aqueous dispersion (R1) | 80 | | | |
| | Aqueous dispersion (R2) | | 80 | | |
| | Aqueous dispersion (R3) | | | 80 | |
| | Aqueous dispersion (R4) | | | | 80 |
| | Curing agent | 18.1 | 18.1 | 9.6 | 9.6 |
| | Solvent | 6.0 | 4.0 | 3.2 | 3.2 |
| | Equivalent ratio (NCO/OH) | 1.5 | 1.5 | 1.2 | 1.2 |
| Evaluation results | Coating film appearance | B | B | B | A |
| | Substrate adhesion (ABS) | 4B | 0B | 5B | 5B |
| | Substrate adhesion (PC) | 0B | 0B | 5B | 5B |
| | Hot-water resistance (whitening) | A | A | B | A |
| | Hot-water resistance (adhesion: ABS) | 5B | 5B | 5B | 5B |
| | Hot-water resistance (adhesion: PC) | 0B | 0B | 5B | 5B |
| | Ethanol resistance | A | A | A | A |
| | Sunscreen resistance | A | C | B | C |

It was confirmed that the aqueous dispersions of Examples 1 to 5 have excellent storage stability, and the resulting coating films have excellent appearance, substrate adhesion, hot-water resistance, ethanol resistance, and sunscreen resistance.

In Comparative Example 1, the glass transition temperature of the acrylic polymer exceeds the upper limit of the present invention, and the appearance and substrate adhesion of the resulting coating film were found to be insufficient.

Comparative Example 2 is an example in which the amount of alkyl (meth)acrylate (a1) having an alkyl group having 1 or 2 carbon atoms in the monomer raw materials of the acrylic polymer is less than the lower limit of the present invention, and the appearance, substrate adhesion, and sunscreen resistance of the resulting coating film were found to be insufficient.

Comparative Example 3 is an example in which the amount of isobornyl (meth)acrylate (a2) in the monomer raw materials of the acrylic polymer is less than the lower limit of the present invention, and the storage stability was found to be insufficient and the appearance of the resulting coating film was found to be insufficient.

Comparative Example 4 is an example in which the amount of isobornyl (meth)acrylate (a2) in the monomer raw materials of the acrylic polymer is greater than the upper limit of the present invention, and the storage stability was found to be insufficient and the sunscreen resistance of the resulting coating film was found to be insufficient.

## Claims

1. An aqueous dispersion comprising:
an acrylic polymer (A) including, as essential raw materials, an alkyl (meth)acrylate (a1) having an alkyl group having 1 or 2 carbon atoms, an isobornyl (meth)acrylate (a2), an unsaturated monomer (a3) having a hydroxyl group, and an unsaturated monomer (a4) having an acid group; and
an aqueous medium (B), wherein
the alkyl (meth)acrylate (a1) is present in an amount of 20 to 50% by mass, the isobornyl (meth)acrylate (a2) is present in an amount of 20 to 60% by mass, the unsaturated monomer (a3) is present in an amount of 2 to 15% by mass, and the unsaturated monomer (a4) is present in an amount of 2 to 5% by mass in monomer raw materials of the acrylic polymer (A),
the acrylic polymer (A) has a weight average molecular weight of 1,000 to 40,000, and
the acrylic polymer (A) has a glass transition temperature of 60 to 90°C.

2. The aqueous dispersion according to claim 1, wherein an average particle size of particles formed with the acrylic polymer (A) is 50 to 200 nm.

3. An aqueous paint comprising the aqueous dispersion according to claim 1 or 2.

4. A plastic molded article having a coating film of the aqueous paint according to claim 3.
